# EUROPEAN PATENT SPECIFICATION

(11) **EP 1 458 118 B1**
(45) Date of publication and mention of the grant of the patent: **02.08.2006**
(21) Application number: 04250901.8
(22) Date of filing: 20.02.2004
(51) Int. Cl.: H04B 7/005

(54) **Methods of transmitting channel quality information and power allocation in wireless communication systems**
Verfahren zum Übertragen von Kanalqualitäts-Information und Leistungszuteilung in drahtlosen Kommunikationssystemen
Procédé pour transmettre de l'information sur la qualité du canal et allocation de puissance dans des systèmes de communication sans fil

(30) Priority: 14.03.2003 US 387866
(43) Date of publication of application: 15.09.2004
(73) Proprietor: LUCENT TECHNOLOGIES INC., Murray Hill, New Jersey 07974-0636 (US)
(72) Inventor: Farooq, Ullah Khan, Manalapan New Jersey 07726 (US)
(74) Representative: Sarup, David Alexander

(56) References cited:
- EP-A- 1 289 166
- EP-A- 1 289 167
- WO-A-02/093757
- WO-A-03/067783
- US-A1- 2002 151 311
- US-A1- 2003 039 217

## Description

### BACKGROUND OF THE INVENTION

### Field of the Invention

The present invention relates to transmitting channel quality information in wireless communication systems, and to allocating transmit power based on the channel quality information.

### Description of Related Art

Expanded efforts are underway for the evolution of 3rd generation (3G) wireless communication systems such as the Universal Mobile Telecommunications System (UMTS) and cdma2000 1x. These 3G evolutions, reflected in the high-speed downlink packet access (HSDPA) system in UMTS and in the recent 1x EV-DV standards, have begun to address the challenges of supporting the separate and often conflicting needs of voice and high-speed data simultaneously and efficiently on the same carrier, in a manner that may be fully backward compatible.

To meet the rapidly developing needs associated with wireless applications such as wireless internet applications, for example, and to support HSDPA, these 3G systems utilize performance enhancing technologies such as Fast Scheduling, Adaptive Modulation and Coding (AMC) and Hybrid Automated Repeat Request (HARQ). Fast Scheduling is a channel quality sensitive scheduling technique to maximize sector throughput, e.g., a base station assigns resources to one or more users at a given time based on channel quality. AMC technologies enable a selection of a data rate and a transmission format (i.e., modulation level and channel coding rate) that best "suits" the scheduled user's prevailing channel condition.

Delays and measurement errors may result in degraded performance from AMC. For example, suppose a block of bits or a packet was sent out using QPSK modulation and a code rate of 0.5 and was received erroneously. A retransmission of that packet takes place, in general with a new appropriate choice of modulation and in general, with at least a few new "parity" bits from the original set of coded bits. HARQ technologies may thus be used to provide some level of robustness through fast retransmissions at the physical layer, in an attempt to minimize degradation.

HARQ allows combining of the original transmission with the new transmission, rather than to discard the original transmission. This may improve the probability of correct decoding of the packet. The word "hybrid" in HARQ indicates that Forward Error Correction (FEC) techniques are used in addition to ARQ techniques. HARQ combining schemes imply that retransmissions are combined with the original unsuccessful transmissions. Accordingly, HARQ helps to ensure that transmissions resulting in unsuccessful decoding, by themselves, are not wasted.

Further evolution of 3G standards include high-speed reverse link packet access (mobile station to base station). While much of the standardization to date has focused on the forward link enhancements are now being considered for the reverse link. The enabling technologies discussed above may also be used on the reverse link to improve the data rates and system capacity, for example.

In order to support HARQ operations on the reverse link, an ACK/NACK mechanism is needed on the forward link. For users communicating with only a single base station, a single ACK/NACK channel would be needed to provide HARQ feedback. For users in Soft Handoff (SHO), e.g., communicating with multiple base stations, ACK/NACKs would be needed from all the base stations that the user is in SHO with. This would allow exploitation of SHO gains, since the user would not retransmit a packet if at least one base station positively acknowledged the packet.

In a CDMA system, a user may be in communication with more than one base station at a given time. The group of cells that the mobile is in communication with is referred to as the active set. In general, the base station with the strongest signal is declared as the primary cell (also called serving cell) and the remaining cells in the active set are referred to as non-primary, or non-serving cells. A high-speed data channel on the forward link called a Forward Packet Data channel (F-PDCH) is transmitted from the primary cell. As the mobile moves from cell to cell, the mobile's active set and primary cell may change.

On the reverse link, the high speed data channel can be received at all the cells (primary and non-primary) in the active set, or in a subset of the active set. Therefore, the cells in the active set should be able to ACK/NACK the high-speed transmissions using Hybrid ARQ. In order for the HARQ protocol to be reliable, the primary and non-primary base stations should use the appropriate power level for the HARQ acknowledgment signaling message, so that the signal is received with high reliability. In the cdma2000 Revision C standard, a Reverse Channel Quality Indication Channel (R-CQICH) channel carries the forward link (FL) channel quality feedback for only the primary cell. Therefore, this channel quality feedback can also be used in allocating the power to the HARQ acknowledgment from the primary cell. However, conventionally there is no channel quality feedback information for the non primary cells.

The ACK power allocation could also be problematic in cases where a FL power control is present. This would be the case, for example, when a voice call is in SHO from a mobile station supporting simultaneous voice/data communication. The FL power control in CDMA guarantees that the mobile receives the FL signal at a certain power level from at least one base station. The mobile would send power DOWN commands to all the base stations if the signal level from at least one base station is more than the desired threshold. Therefore, the FL power control does not guarantee appropriate power allocation for the acknowledgment signal, which needs to be reliable from all the base stations in the active set. Accordingly, there is no mechanism that enables reliable HARQ acknowledgment (ACK/NACK) transmissions for users in SHO with multiple base stations.

EP-A-1 289 166 discloses a power controlling method during a soft handoff in a mobile communication system. EP-A-1 289 166 discloses that a mobile station executing a soft handoff measures the signal strengths of powerup signals received from the base stations associated with the soft handoff. The mobile station then outputs the measured signal strengths of the received pilot signals back to the respective base stations. The base stations then adjust their transmission power based on the received indicators of the measured signal strengths of the pilot signals at the mobile station.

WO-A-03/067 783 discloses a method of power control of serving and non-serving base stations. WO-A-03/067 783 discloses a general method of combining a plurality of commands for a plurality of base stations into a single command in order to avoid excessive interference and increasing a required capacity for a communication system.

### Summary of the Invention

Methods according to the invention are as set out in the independent claims. Preferred forms are set out in the dependent claims.

### BRIEF DESCRIPTION OF THE DRAWINGS

Exemplary embodiments of the present invention will become more fully understood from the detailed description given hereinbelow and the accompanying drawings, wherein like elements are represented by like reference numerals, which are given by way of illustration only and thus are not limitative of the exemplary embodiments of the present invention and wherein:

FIG. 1 is a diagram of an exemplary wireless communication system;

FIGS. 2(a) and 2(b) illustrate a scheduled mode of transmission and reverse link packet transmission timing in accordance with an exemplary embodiment of the invention;

FIG. 3 illustrates an autonomous mode of transmission in accordance with an exemplary embodiment of the invention;

FIGS 4(a) through 4(e) illustrate HARQ transmission scenarios from multiple cells in accordance with an exemplary embodiment of the invention;

FIG. 5 is a flow diagram describing a method in accordance with an exemplary embodiment of the invention;

FIGS. 6(a) and 6(b) illustrate CQI field formats in accordance with the method of FIG. 5;

FIG. 7 is a flow diagram describing a method in accordance with another exemplary embodiment of the invention; and

FIG. 8 illustrates a frame carrying CQIs for multiple base stations in accordance with the method of FIG. 7.

### DETAILED DESCRIPTION OF THE EXEMPLARY EMBODIMENTS

The following description may be described as based on a wireless communication system operating in accordance with the recently approved cdma2000 1x EV-DV standard (cdma2000 Release C), which, unlike 1x EV-DO, combines voice and data on a single 1.25 MHz channel in order to provide integrated voice with simultaneous packet data services at speeds of up to 3.1 Mbps, while being backward compatible with CDMA One and cdma2000 1x. Although the exemplary embodiments of the present invention will be described in this exemplary context, the exemplary embodiments shown and described herein are meant to be illustrative only and are not limiting in any way. As such, various modifications will be apparent to those skilled in the art for application to other communications systems, such as the Universal Mobile Telecommunications System (UMTS) as reflected in the high-speed downlink packet access (HSDPA) system specification, for example, and are contemplated by the teachings herein.

Where used below, a mobile station is a device providing data connectivity to a user. A mobile station may be connected to a computing device such as a laptop, personal computer (PC), or it may be a self-contained data device such as a personal digital assistant (PDA) or cellular phone. Accordingly, a mobile station is equivalent to, and may be also be referred to as, an access terminal, wireless mobile, remote station, user, user equipment (UE), subscriber or any other remote user of wireless resources in a wireless communications network.

Additionally, a base station refers to network equipment providing data connectivity between a packet switched data network (PSDN) or ISDN (e.g., the Internet) and one or more mobile stations. A base station may be equivalent to, and may also be referred to as a base transmitter station, Node-B, access network or radio access network (RAN). An access network/RAN may be composed of one or more base stations.

Problems encountered with HARQ power allocation as described above could be avoided if forward link channel quality feedback information can be provided to all base stations in a user's (mobile station's) active set (e.g., primary cells and non-primary cells). The channel quality information is carried in-band as part of an encoder packet.

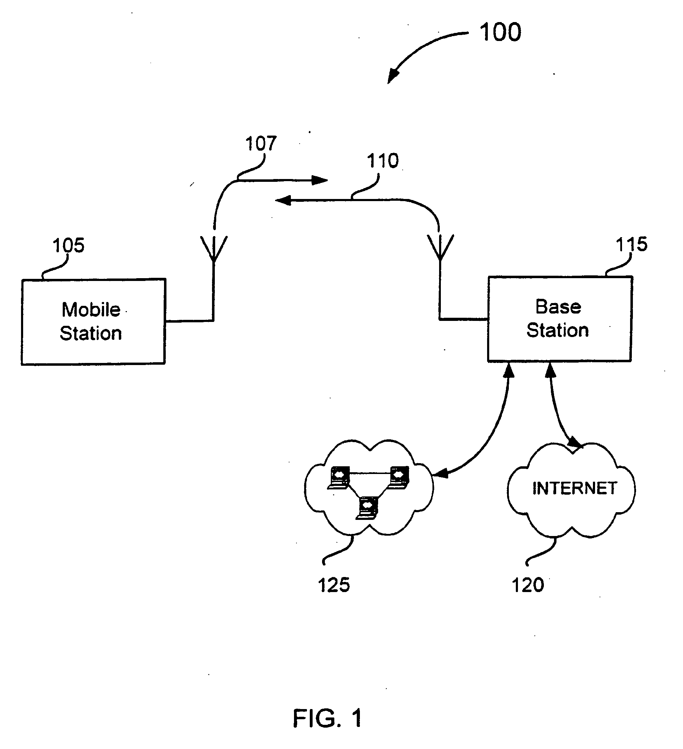

Fig. 1 is a block diagram of an exemplary wireless communication system100. System 100 may include one or more mobile stations 105 in communication with a base station 115. Mobile station 105 may communicate through base station 115 to exchange packet data with the Internet 120 or some other packet data network 125, such as a closed corporate network (e.g., intranet) for example. Examples of packet data may include Internet Protocol (IP) datagrams used for applications such as accessing web pages and retrieving email. Such packet data applications may run on mobile station 105, or may run on a separate computer device that uses mobile station 105 as a wireless modem. In an exemplary embodiment, mobile station 105 may communicate with wireless network 115 over an air interface, which may be a set of forward and reverse channels for example. This may be shown as forward link 107 and reverse link 110.

Base station 115 may consist of a single base station and base station controller, or may include a plurality of separately located wireless base stations (e.g., access network and a base station controller connected together as an aggregate base station 115. Each base station may have a predetermined number of traffic channels to use for exchanging data with mobile stations 105. When one of the traffic channels is assigned to a mobile station 105, that mobile station 105 may be referred to as an active mobile station 105. At least one traffic channel is assigned to each active mobile station 105. Base station 115 may be connected with packet data network 120 using back-haul facilities such as T1/E1, STM-x, etc, or any other appropriate type of network connection, such as wireless or wireline T1 or T3, fiber optic connection, Ethernet, etc. Base station 115 may be connected to multiple packet data networks having more than one type. For example, instead of an intranet, another network 125 might be a public switched telephone network (PSTN) connected with base station 115 through a data services inter-working function (IWF).

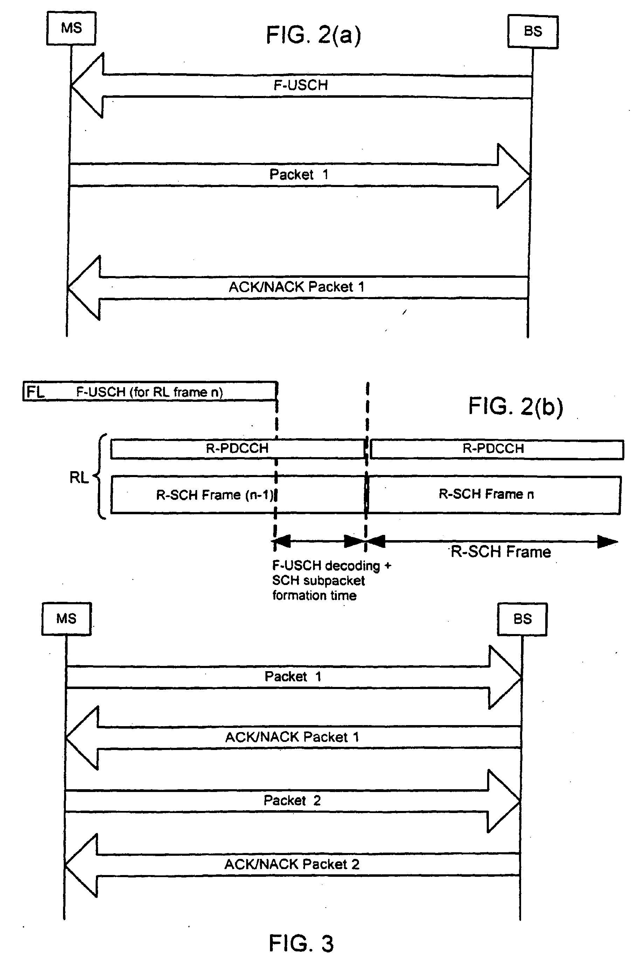

FIGS. 2(a) and 2(b) illustrate a scheduled mode of transmission and reverse link packet transmission timing in accordance with an exemplary embodiment of the invention. When mobile station 105 is in a scheduled mode of transmission, i.e., in order to support packet scheduling on the reverse link (RL), a scheduling grant containing information about mobile identity and other control information should be sent on the forward link (FL). In the cdma2000 Revision D proposals, a code-multiplexed control channel called a Forward-Uplink Scheduling Channel (F-USCH) carries the scheduling grant on the forward link for the mobile(s) scheduled to transmit data in a Reverse Supplemental Channel (R-SCH) frame.

As shown in FIGS. 2(a) and 2(b), mobile station 105 transmits a data packet in the R-SCH frame on the reverse link, in response to a scheduling grant message on the forward link. In FIG. 2(b), and in accordance with the exemplary embodiments of the present invention as to be described in further detail below, a reverse link control channel may be defined, herein called a Reverse Packet Data Control Channel (R-PDCCH). The R-PDCCH may be carried for reverse link packet transmissions from the users in SHO. The control channel normally carries information such as encoder packet format indication (data rate etc.) and HARQ related information such as ARQ channel ID and subpacket ID etc, and is transmitted with the R-SCH.

FIG. 3 illustrates an autonomous mode of transmission in accordance with an exemplary embodiment of the invention. In autonomous mode, mobile station 105 can perform a transmission without requiring a scheduling grant transmission from the base station 115.

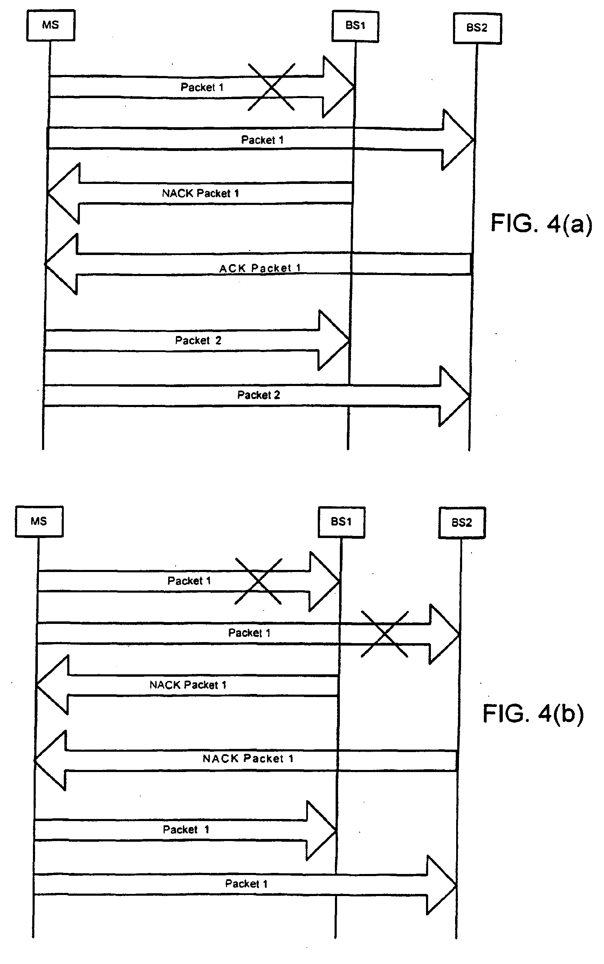

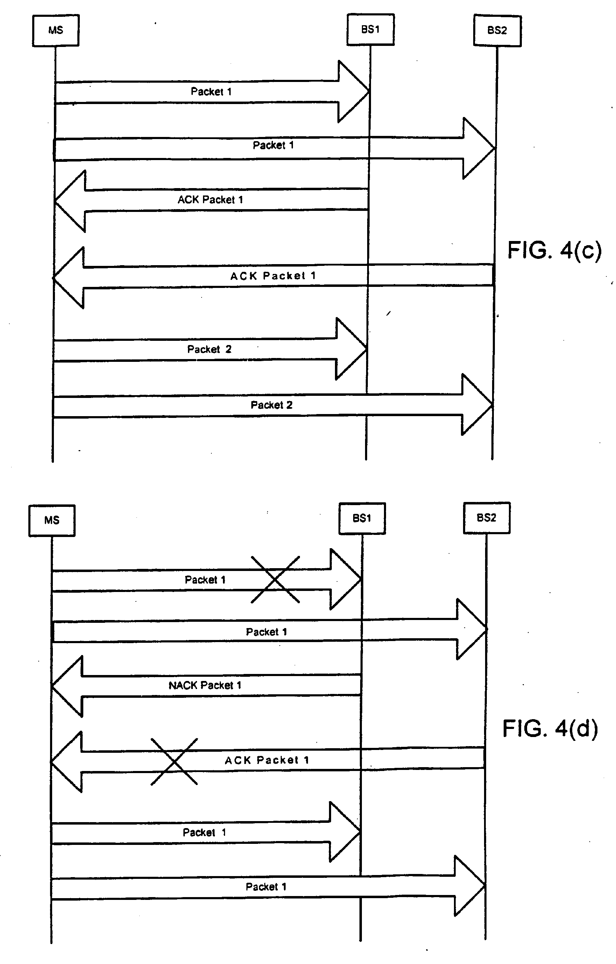

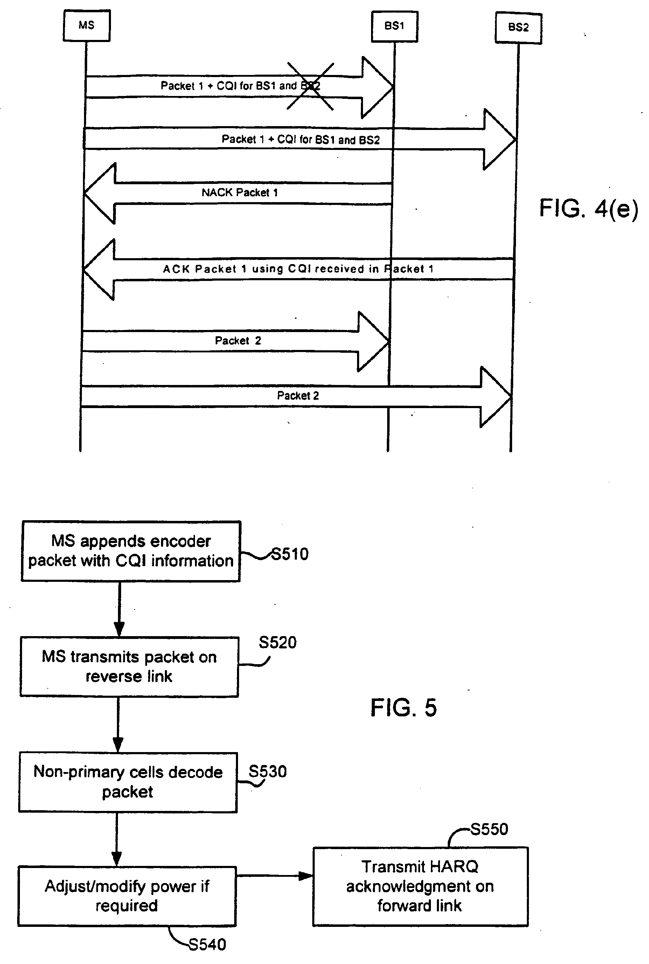

FIGS 4(a) through 4(e) illustrate HARQ transmission scenarios from multiple cells in accordance with an exemplary embodiment of the invention. These figures illustrate the HARQ protocol used in responding to received packets, so as to provide a context for describing a method in accordance with the exemplary embodiments of the present invention that enables reliable HARQ acknowledgment (ACK/NACK) transmissions for a mobile station in SHO with multiple base stations.

In FIG. 4(a), Packet 1 is positively acknowledged by BS2, thus the mobile station sends Packet 2 to BS 1 and BS 2. However, BS1 cannot correctly decode Packet 1 due to an error, thus it sends a NACK. The MS does not need to retransmit Packet 1 to BS1, however, because the packet has been successfully received at BS2, which forwards the correctly received packet to the network. In FIG. 4(b), Packet 1 is retransmitted after being received in error at both BS1 and BS2. In FIG. 4(c), Packet 1 is received correctly at BS1 and BS2. In FIG. 4(d) there is an error in transmission of Packet 1 to BS1, and an error in the HARQ acknowledgment from BS2 to the MS. This is an indication that the ACK from BS2 was transmitted at an inappropriate power level, thus the HARQ ACK message was lost in transmission. In FIG. 4(e) the MS sends CQI for both BS1 and BS2, along with Packet 1 transmission. Packet 1 is successfully received at BS2, and BS2 positively acknowledges Packet 1 using its CQI information in Packet 1 for the ACK transmission.

FIG. 5 is a flow diagram describing a method in accordance with an exemplary embodiment of the invention. In order to provide forward link CQI feedback to one or more base stations, a mobile station 105 transmits channel quality information in-band as part of a packet. Referring to FIG. 5, channel quality indicator (CQI) information for two or more non-primary cells (those non-serving base stations 115 that are members of the active set) are appended (S510) as a header to an encoder packet. The mobile station 105, which may be in SHO with two or more non-primary cells, then transmits (S520) the packet on the reverse link. Since the CQI information is only transmitted with a packet transmission, resource efficiency may be improved for transmitting channel quality feedback to multiple cells. There is no need for multiple CQI channels, thereby potentially reducing overhead and the possibility of severe collisions or interference with other transmissions.

The base stations 115 decode (S530) the encoder packet. This may be done before these non-primary cells transmit a HARQ ACK message to mobile station 105. Thus, a non-serving base station may adjust or modify (S540) the transmit power, before transmitting (S550)a subsequent HARQ acknowledgment signaling message based on the CQI information, thereby conserving resources. The following Table 1 illustrates exemplary encoder packet bits for an 8-bit CQI header field.

**Table 1 Encoder packet (EP) bits for 8-bit CQI field**

| | **768 bits EP** | **576 bits EP** | **336 bits EP** | **48 bits EP** |
|---|---|---|---|---|
| Data bits | 760 | 568 | 328 | 40 |
| CQI bits | 8 | 8 | 8 | 8 |
| Total | **768 bits** | **576 bits** | **336 bits** | **48 bits** |

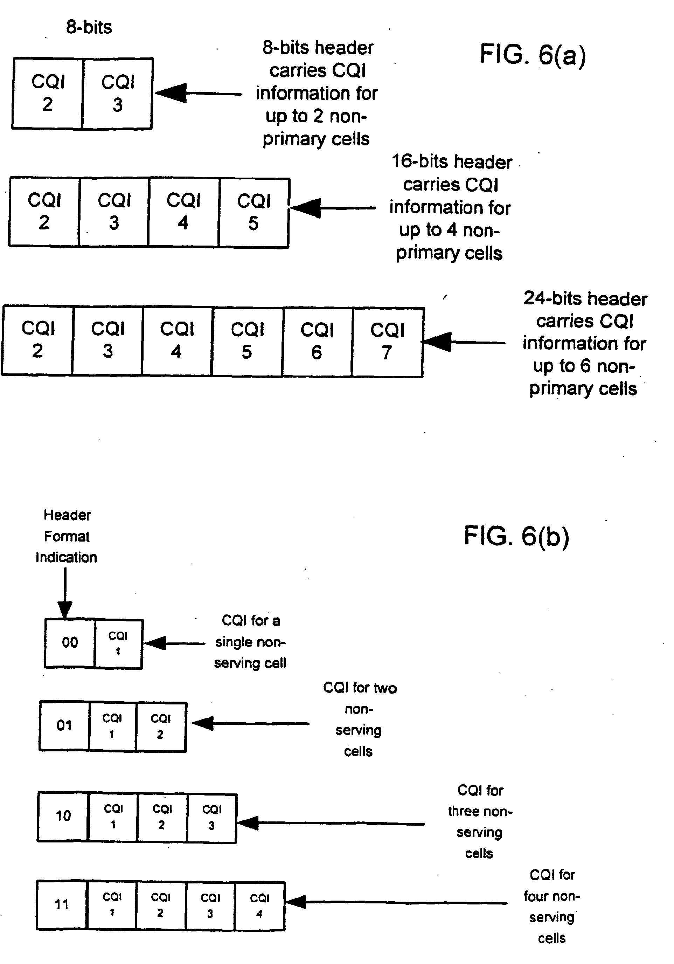

FIGS. 6(a) and 6(b) illustrate CQI field formats in accordance with the method of FIG. 5. In FIG. 6(a), a header may carry CQI information for up to N non-primary cells, for exemplary purposes, FIG. 6(a) shows 8, 16 and 24-bit headers of encoder packets carrying CQI information for 2, 4 and 6 non-primary cells (non-serving base stations).

Thus, for in-band transmission of multiple CQIs, one, two, three ... N additional bytes may be appended to each encoder packet transmitted by a mobile station in SHO with two or more non-co-located sectors (i.e., non-primary cells/non- serving base stations). The CQI information may be available to a non-serving base station after successfully decoding a given encoder packet, before the base station sends a HARQ ACK message for that encoder packet. Accordingly, the base station may modify power at which the HARQ ACK message is transmitted based on the CQI information. Information about what CQI field format is to be used may be conveyed to the mobile station 105 through a higher layer message, such as an order message (ODM). FIG. 6(b) shows that different header formats may be used in order to carry the CQI for multiple base stations. In the example of FIG. 6(b), a 2-bit header format type field indicates up to four different header formats, it being understood that N different header formats are foreseeable in accordance with the exemplary embodiments of the present invention.

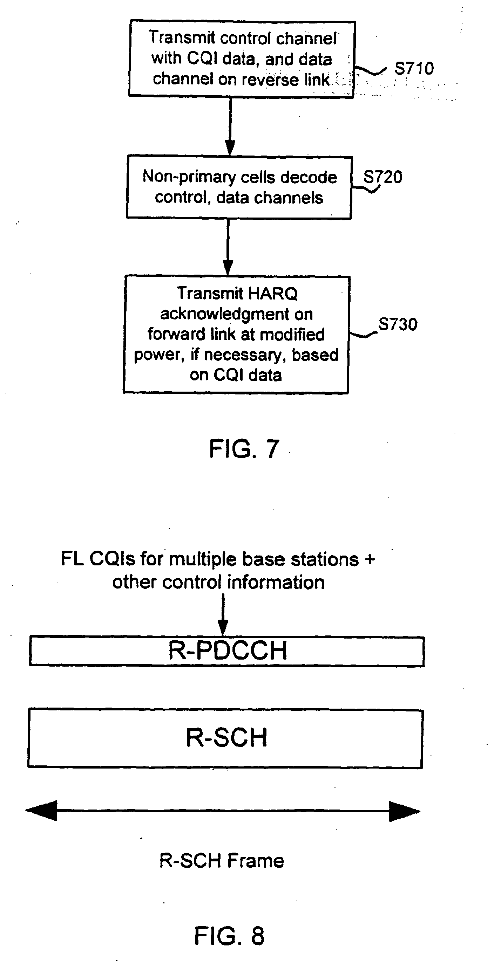

FIG. 7 is a flow diagram describing a method in accordance with another exemplary embodiment of the invention. In order to provide forward link CQI feedback to one or more base stations, a mobile station 105 may transmit channel quality information in a reverse link control channel that is transmitted along with the packet transmission.

Referring to FIG. 7, mobile station 105, in soft handoff with two or more non-primary cells, (non-serving base stations 115 in the active set) transmits (S710) a control channel over the reverse link 110. The control channel contains channel quality indicator (CQI) information, and is transmitted together with a data channel carrying the one or more data packets to two or more non-primary cells. Similar to the previous exemplary embodiment, CQI information for multiple cells is only transmitted with a packet transmission.

The non-primary cells (base stations 115) decode (S720) the control channel containing channel quality indicator (CQI) information and a data channel. Based on the CQI information, the base stations 115 in SHO with the mobile station 105 may adjust or modify power of subsequent transmissions, e.g., power at which a HARQ acknowledgment message is transmitted. This is possible because the forward link channel quality information is available prior to the non-serving base stations transmitting (S730) the HARQ acknowledgment signaling message (ACK/NACK) over forward link 107. Since the CQI information is only transmitted with a packet transmission (control channel with data channel carrying the packet), resource efficiency may be improved for transmitting channel quality feedback to multiple cells. There is no need for multiple CQI channels, thereby potentially reducing overhead and interference with other transmissions.

FIG. 8 illustrates a frame carrying CQIs for multiple base stations in accordance with the method of FIG. 7. In this exemplary embodiment, multiple CQIs are carried on a reverse link control channel. A reverse link control channel, herein called Reverse Packet Data Control Channel (R-PDCCH) may be carried for reverse link packet transmissions from the users in SHO. The control channel normally carries information such as encoder packet format indication (data rate etc.) and HARQ related information such as ARQ channel ID and subpacket ID etc. The R-PDCCH may accompany the R-SCH transmission on the RL and may generally be the same duration as the R-SCH frame. The HARQ information on R-PDCCH helps the non-primary cells in correctly decoding the encoder packets.

The format of the R-PDCCH may be further extended to accommodate the CQIs for multiple base stations. The R-PDCCH transmission should be successfully decoded at a given base station in order to correctly decode the encoder packet. Therefore, the information about the forward link channel quality should also be available to the base station before it sends a HARQ acknowledgment message, i.e., after successfully decoding an encoder packet.

The exemplary embodiments of the present invention being thus described, it will be obvious that the same may be varied in many ways. For example, the exemplary embodiments of the present invention have been described as directed to methods for transmitting channel quality information on the reverse link to non-primary cells in a mobile station's active set. However, it should be understood that the header appended to the encoder packet and/or the CQI information included in the R-PDCCH could also include CQI information for the primary cell, i.e., base station with the strongest signal, or serving cell.

## Claims

1. A method of transmitting channel quality information from a mobile station on a reverse link in a wireless communication system, comprising:
appending channel quality indicator (CQI) information for at least two non-serving base stations in the mobile station's active set as part of a header of an encoder packet; and
transmitting the encoder packet on the reverse link so the at least two or more nop-serving base stations receive forward link CQI feedback information to determine whether to modify their transmit power for a subsequent transmission.

2. The method of claims 1, wherein the CQI information is only transmitted with the encoder packet.

3. A method of allocating transmit power on a forward link in a wireless communication system, comprising:
decoding, at each of two or more non-serving base stations in a mobile station's active set, a packet received from the mobile station that includes channel quality indicator (CQI) information related to the forward link for the at least two non-serving base stations; and
modifying transmit power at the at least two non-serving base stations for subsequent transmissions based on the CQI information, wherein CQI information for up to N non-serving base stations in the mobile station's active set is included in a header of the packet.

4. The method of claim 3, wherein modifying further includes modifying transmit power at which a HARQ acknowledgment message is transmitted from each of the two non-serving base stations based on the CQI information.

## Patentansprüche

1. Verfahren zum Übertragen von Kanalqualitäts-Information von einer Mobilstation auf einer Rückwärtsverbindung in einem drahtlosen Kommunikationssystem, aufweisend:
Anhängen von CQI-Information (CQI = Kanalqualitätsanzeiger) für mindestens zwei nicht-bedienende Basisstationen im aktiven Satz der Mobilstation als Teil einer Kopfzeile eines Kodierungspakets; und
Übertragen des Kodierungspakets auf der Rückwärtsverbindung, so dass die mindestens zwei oder mehr nicht-bedienenden Basisstationen Vorwärtsverbindungs-(CQI)-Rückmeldungsinformation empfangen, um zu bestimmen, ob sie ihre Übertragungsleistung für eine nachfolgende Übertragung modifizieren sollen.

2. Verfahren nach Anspruch 1, wobei die CQI-Information nur mit dem Kodierungspaket übertragen wird.

3. Verfahren zur Zuweisung von Übertragungsleistung auf einer Vorwärtsverbindung in einem drahtlosen Kommunikationssystem, aufweisend:
Dekodieren, an jeder von zwei oder mehr nicht-bedienenden Basisstationen im aktiven Satz einer Mobilstation, eines von der Mobilstation empfangenen Pakets welches CQI-Information (CQI = Kanalqualitätsanzeiger) enthält, die sich auf die Vorwärtsverbindung für die mindestens zwei nicht-bedienenden Basisstationen bezieht; und
Modifizieren der Übertragungsleistung an den mindestens zwei nicht-bedienenden Basisstationen für nachfolgende Übertragungen aufgrund der CQI-Information, wobei die CQI-Information für maximal N nicht-bedienende Basisstationen im aktiven Satz der Mobilstation in der Kopfzeile des Pakets enthalten ist.

4. Verfahren nach Anspruch 3, wobei das Modifizieren ferner das Modifizieren der Übertragungsleistung beinhaltet, mit der eine HARQ-Bestätigungsnachricht von jeder der zwei nicht-bedienenden Basisstationen aufgrund der CQI-Information übertragen wird.

## Revendications

1. Procédé de transmission d'informations de qualité de canal depuis une station mobile sur une liaison retour dans un système de communication sans fil, comprenant :
l'addition d'une information d'indicateur de qualité de canal (CQI) pour au moins deux stations de base non de desserte dans l'ensemble actif de la station mobile en tant que partie d'un en-tête d'un paquet codeur ; et
la transmission du paquet codeur sur la liaison retour de telle sorte que les au moins deux ou plusieurs stations de base non de desserte reçoivent une information de retour de CQI sur liaison aller afin de déterminer s'il convient de modifier leur puissance d'émission pour une transmission ultérieure.

2. Procédé selon la revendication 1, dans lequel l'information CQI n'est transmise qu'avec le paquet codeur.

3. Procédé d'attribution de puissance d'émission sur une liaison aller dans un système de communication sans fil, comprenant :
le décodage, au niveau de chacune de deux ou plusieurs stations de base non de desserte dans l'ensemble actif d'une station mobile d'un paquet reçu depuis la station mobile qui inclut une information d'indicateur de qualité de canal (CQI) liée à la liaison aller pour les au moins deux stations de base non de desserte ; et
la modification de la puissance d'émission au niveau des au moins deux stations de base non de desserte pour des transmissions ultérieures en fonction de l'information CQI, dans lequel l'information CQI de jusqu'à N stations de base non de desserte dans l'ensemble actif de la station mobile est incluse dans un en-tête du paquet.

4. Procédé selon la revendication 3, dans lequel la modification comporte en outre la modification de la puissance d'émission à laquelle un message d'accusé de réception HARQ est transmis depuis chacune des deux stations de base non de desserte en fonction de l'information CQI.
